# EUROPEAN PATENT APPLICATION

(11) **EP 4 797 239 A1**
(43) Date of publication of application: **26.08.2026**
(21) Application number: 25159159.0
(22) Date of filing: 20.02.2025
(51) Int. Cl.: G08G 3/02

(54) **ASSISTING AN OPERATOR IN COLLISION AVOIDANCE**

(71) Applicant: ABB SCHWEIZ AG, 5400 Baden (CH)
(72) Inventor: TERVO, Kalevi, 00980 Helsinki (FI)
(74) Representative: Kransell & Wennborg KB

(57) **Abstract**

The invention relates to a method, collision avoidance device, computer program and computer program product for assisting an operator in collision avoidance for a first vessel (22) traveling in a present passage along a route (OR) in a body of water as well as to such a first vessel (22). The collision avoidance device detects a risk situation for the first vessel (22) involving a possible collision with an object (30), determines a number of parallel collision avoidance schemes (CAS1, CAS2, CAS3, CAS4), presents the collision avoidance schemes (CAS1, CAS2, CAS3, CAS4) to the operator, selects one of the collision avoidance schemes, performs collision avoidance according to the selected collision avoidance scheme and displays the progress of the first vessel (22) according to the selected collision avoidance scheme together with the non-selected collision avoidance schemes.

## Description

### TECHNICAL FIELD

The invention relates to a method, collision avoidance device, computer program and computer program product for assisting an operator in collision avoidance for a first vessel traveling in a present passage along a route in a body of water as well as to such a first vessel.

### BACKGROUND

One important aspect in vessel operation is the Collision Detection and Collision Avoidance (CDCA) system. The CDCA system basically mimics the human navigator's risk assessment and decision-making procedure to enable safe and efficient operation of a vessel while performing actions to avoid grounding or collisions with static and dynamic obstacles.

Human decision making is by nature multi-objective. A human decision maker can create alternative scenarios and evaluate them against each other.

So far all of the known CDCA systems for autonomous navigation or providing advice in conventional navigation are based on a single objective and therefore a single suggestion is provided.

The CDCA system utilizes inputs from sensors, such as radar, camera, positioning, wind, compass, Electronic Nautical Chart (ENC), etc. as well as the planned route to evaluate whether a collision avoidance action is needed. It can only consider the inputs from the sensors and captured by the mathematical models and algorithms. The human judgement of overall conditions, development of the situation ahead, knowledge about local phenomena, such as strong currents, etc. are typically not considered.

Therefore, the adoption of CDCA systems in practice can now be done only in a way that the human operator is responsible of safe actions. This means that the human operator needs to be aware of the situation and have means to take over the command at all situations.

When a human navigator performs a decision to execute a collision avoidance maneuver in a navigational situation, he or she considers multiple factors and possible several scenarios before executing it. The choice of the action may depend on the overall consideration of the local phenomena, information received from radio communication, or other experience-based information which cannot be captured into measurements of mathematical representations of the situations based on the existing sources of information.

In complex situations, there could be many alternative collision maneuvers. It might be difficult for a human operator to evaluate simultaneously what actions are feasible. On the other hand, the existing collision avoidance systems calculate and present a single alternative at a time. In case the system has a wrong interpretation of the situation, the advisory given by the system may be completely wrong and useless.

Therefore, there is a need for improving the way that collision avoidance is performed.

### SUMMARY

One objective of the invention is therefore to improve the way that collision avoidance is performed.

This objective is according to a first aspect achieved through a method for assisting an operator in collision avoidance for a first vessel traveling in a present passage along a route in a body of water, the method being performed by a collision avoidance device and comprising:
detecting a risk situation for the first vessel involving a possible collision with an object,
determining a number of parallel collision avoidance schemes,
presenting the collision avoidance schemes to the operator,
selecting one of the collision avoidance schemes,
performing collision avoidance according to the selected collision avoidance scheme, and
displaying the progress of the first vessel according to the selected collision avoidance scheme together with the non-selected collision avoidance schemes.

The objective is according to a second aspect achieved through a collision avoidance device for assisting an operator in collision avoidance for a first vessel traveling in a present passage along a route in a body of water, the collision avoidance device comprising a processor operative to:
detect a risk situation for the first vessel involving a possible collision with an object,
determine a number of parallel collision avoidance schemes,
present the collision avoidance schemes to the operator,
select one of the collision avoidance schemes,
perform collision avoidance according to the selected collision avoidance scheme, and
display the progress of the first vessel according to the selected collision avoidance scheme together with the non-selected collision avoidance schemes.

The objective is according to a third aspect achieved through a first vessel comprising the collision avoidance device according to the second aspect.

The objective is according to a fourth aspect achieved through a computer program for assisting an operator in collision avoidance for a first vessel traveling in a present passage along a route in a body of water, the computer program comprising computer program code which when run by a processor of a collision avoidance device causes the processor to:
detect a risk situation for the first vessel involving a possible collision with an object,
determine a number of parallel collision avoidance schemes,
present the collision avoidance schemes to the operator,
select one of the collision avoidance schemes,
perform collision avoidance according to the selected collision avoidance scheme, and
display the progress of the first vessel according to the selected collision avoidance scheme together with the non-selected collision avoidance schemes.

The objective is according to a fifth aspect achieved through a computer program product for assisting an operator in collision avoidance for a first vessel traveling in a present passage along a route in a body of water, the computer program product comprising a data carrier with the computer program code according to the fourth aspect.

The presenting of the collision avoidance schemes may with advantage be a displaying of the collision avoidance schemes.

An object may be an object above, in or below the water.

An object may be a floating object, such as a buoy or another vessel. It may also be navigational hazard like an iceberg, but also shallow water, ground or a virtual forbidden area (determined by the operator for example). Objects above water can be cranes, bridges, platforms, terminal tunnels or gangways. Objects in water can be quays, islands, reefs, buoys, rafts and other vessels. Objects below water can be reefs and underwater rocks and part of the seabed if it is shallow.

The first vessel may comprise a sensor unit comprising at least one sensor for sensing the surroundings of the first vessel in the body of water.

The parallel collision avoidance schemes may each have a starting position in the present passage of the route, which starting position may be a present position at a present point in time or a later position at a future point in time. The starting positions may be the same. Each scheme may thus have the same starting position. Alternatively, one or more of the schemes may have starting positions that differ from eachother.

According to one variation of the first aspect, the method further comprises continuously analysing the risk situation and updating the parallel collision avoidance schemes based on the analysis.

According to a corresponding variation of the second aspect, the collision avoidance device is further operative to continuously analyze the risk situation and update the parallel collision avoidance schemes based on the analysis.

According to another variation of the first aspect, the method further comprises updating the non-selected collision avoidance schemes based on the progress according to the selected collision avoidance-scheme.

According to a corresponding variation of the second aspect, the collision avoidance device is further operative to update the non-selected collision avoidance schemes based on the progress according to the selected collision avoidance-scheme.

The non-selected collision schemes may thus be updated based on the progress of the first vessel along a path of the selected collision avoidance scheme.

The updating of the parallel collision avoidance schemes may additionally be made if the situation develops in a different way than anticipated, such as if the risk for collision remains or a new risk for collision is introduced during the use of the selected collision avoidance scheme.

According to a further variation of the first aspect, the method further comprises analysing each of the parallel collision avoidance schemes and determining a primary collision avoidance scheme based on the analysis.

According to a corresponding variation of the second aspect, the collision avoidance device is further operative to analyze each of the parallel collision avoidance schemes and determine a primary collision avoidance scheme based on the analysis.

The analysing may additionally comprise ranking the collision avoidance schemes according to a ranking criterion, where the primary collision avoidance scheme is the highest ranked collision avoidance scheme.

The ranking criterion may consider factors, such as energy efficiency, safety and time.

The ranking can additionally be adjusted by the operator.

The primary collision avoidance scheme may additionally be determined based on a selection criterion such as priority, vessel type and/or situation.

The selection may comprise an automatic selection of the primary collision avoidance scheme.

According to yet another variation of the first aspect, the method further comprises receiving a collision avoidance scheme choice made by the operator and the selecting of the collision avoidance scheme comprises selecting a collision avoidance scheme according to this choice for use in performing collision avoidance

According to a corresponding variation of the second aspect, the collision avoidance device is further operative to receive a collision avoidance scheme choice made by the operator and when selecting the collision avoidance scheme the collision avoidance device is operative to select a collision avoidance scheme according to this choice for use in performing collision avoidance.

The present passage along the route may involve a passage in a first fairway and at least one of the parallel collision avoidance schemes may involve a change of heading. At least one collision avoidance scheme may additionally or instead involve a change of course inside the first fairway.

At least one collision avoidance scheme may involve a leaving of the first fairway. At least one collision avoidance scheme may additionally or instead involve changing course from the first fairway to a second fairway.

The first fairway may pass one side of an element in the body of water and the second fairway may pass on another side of the element, where the element may be an object of any of the previously described types.

At least one collision avoidance scheme may involve a change of speed of the first vessel. Additionally or instead, at least one collision avoidance scheme may involve stopping the first vessel.

At least one collision avoidance scheme may involve performing an unregulated turn, which unregulated turn may not follow standardised rules, such as turning rules according to COLREG.

At least one collision avoidance scheme may have tolerance settings with regard to time, distance, and/or speed to an object that the first vessel risks to collide with, which tolerance settings may be set based on vessel type and/or situation.

At least on tolerance may be linked to said later position and/or future point in time. At least one tolerance may additionally be linked to a closest allowed distance of the first vessel to the object possibly together with a highest allowed speed.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a first way of realizing a collision avoidance device,
fig. 2 shows a computer program product in the form of a CD ROM with computer program code used to implement the collision avoidance device,
fig. 3 schematically shows a first vessel comprising the collision avoidance device, a vessel navigation control device, a display and a sensor unit,
fig. 4 schematically shows the first vessel traveling along an original route and a number of alternative routes according to a number of collision avoidance schemes for avoiding collision with another vessel,
fig. 5 shows a flow chart of a number of method steps in a first embodiment of a method for assisting an operator in collision avoidance for the first vessel, and
fig. 6 shows a flow chart of a number of method steps in a second embodiment of a method for assisting an operator in collision avoidance for the first vessel.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

Aspects of the present disclosure are directed towards collision avoidance.

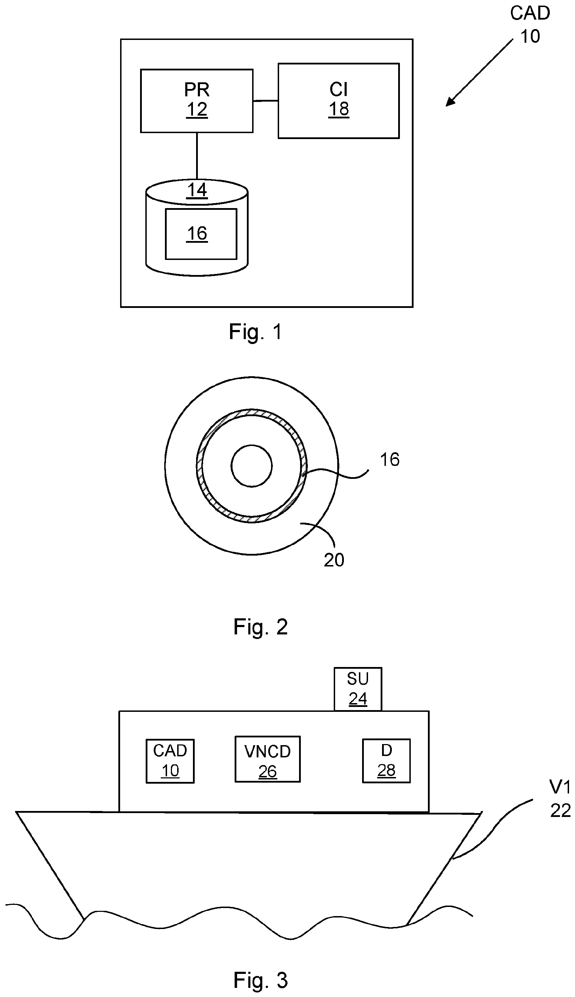

Fig. 1 schematically shows one realization of a collision avoidance device CAD 10. In the present example, the collision avoidance device 10 comprises a processor PR 12 and a data storage 14 with computer program instructions or computer program code 16 that, when executed by the processor 12, implements a collision avoidance function. There is also a communication interface CI 18. The communication interface 18 may comprise a computer communication section, which in turn may be an Ethernet interface for connection to a local area network (LAN) for instance a LAN provided in a vessel. It should be realized that it is possible that the communication interface 18 also comprises a radio communication section with a transceiver for wireless communication.

The collision avoidance device 10 may thus comprise a processor 12 with associated program memory 14 including computer program code 16 for implementing the collision avoidance function.

A computer program may also be provided via a computer program product, for instance in the form of a computer-readable storage medium or data carrier, like a CD ROM or a memory stick, carrying such a computer program with the computer program code, which will implement the collision avoidance function when being loaded into a processor. One such computer program product in the form of a CD ROM 20 with the above-mentioned computer program code 16 is schematically shown in fig. 2. Such a computer-readable storage medium may also be termed a non-transitory storage medium.

The collision avoidance device 10 may with advantage be provided in a first vessel.

Fig. 3 schematically shows a first vessel V1 22 comprising the collision avoidance device CAD 10. The first vessel 22 may additionally comprise at least one sensor. In the example in fig. 3, the first vessel 22 comprises a sensor unit SU 24. It also comprises a vessel navigation control device VNCD 26 and a display D 28. The vessel navigation control device 26 may be realized in the same way as the collision avoidance device 10, i.e. through a processor operating on software in a memory. The vessel navigation control device 26 may be provided through the same processor and memory as the collision avoidance device 10. Alternatively, the vessel navigation control device 26 may be provided through a separate processor/memory combination. The devices may additionally be interconnected using a LAN. It should be realized that LAN is merely an example and that other ways of communication are possible, such as fieldbus technologies, wireless technologies and serial communication.

The sensor unit SU 24 may comprise one or more sensors sensing the surroundings of the first vessel 22 in the body of water. It may comprise sensors for measuring relevant quantities, such as vessel velocity and heading. It may also comprise functionality for collecting sensor data such as radar Echoes, Lidar images, ultrasonic echoes and/or camera images. The sensor unit may additionally comprise underwater sensors such as sonar sensors. It is also possible that the first vessel 22 is equipped with a vessel tracking system, such as AIS, where AIS is an acronym for Automatic Identification System. In this case the sensor unit 24 may comprise an AIS transponder. AIS is only one example of a transponder providing "oracle"-like information from a specific object, such as a vessel, fairway marker, navigational hazard, etc. Another example is VHF Data Exchange System (VDES), where VHF is an acronym for Very High Frequency. The sensor unit ₂₄ may additionally comprise a vessel positioning system, a wind sensor and a compass.

Fig. ₄ schematically shows an electronic nautical chart (ENC) in which the first vessel V1 22 is shown to be travelling in a present passage along an original route OR in a body of water, which present passage is made in a first fairway F₁ on one side of an element, object or obstacle, which element, object or obstacle in this case is a stationary object in the form of an island ISL. There is also a second fairway F₂ branching off from the first fairway F₁, which second fairway F₂ passes an opposite side of the element. Thus, the first fairway F₁ passes one side of the element in the body of water and the second fairway F₂ passes on another side of the element.

The vessel navigation control device 26 may be configured to autonomously operate the first vessel. It may for instance operate the first vessel 22 such that it follows the original route OR with a speed that is allowed to vary within a speed envelope, which speed envelope has been defined by an operator of the first vessel 22. Thus, the vessel navigation control device 26 may control the travel of the first vessel along the original route OR, and the operator is merely monitoring the progress. The collision avoidance device 10 in turn handles collision detection and collision avoidance (CDCA).

One aspect of collision detection and collision avoidance in marine applications that differentiates it from collision detection and collision avoidance in other applications, such as automotive applications, is time. In the automotive field risk situations often occur so fast that there is no time for any kind of "dialogue" between the human and collision detection and collision avoidance system. However, in vessels, the risk situation is typically detected several minutes up to hours before the potential collision would occur. Therefore, there is often plenty of time for interactive dialogue between the human and the machine.

It should here be realized that the collision avoidance device 10 can be able to perform collision detection and collision avoidance also when an operator controls the progress of the first vessel 10 along the original route OR, i.e. when the vessel navigation control device 26 is not used.

CDCA basically mimics the human navigator's risk assessment and decision-making procedure to enable safe and efficient operation of a vessel while performing actions to avoid grounding or collisions with static and dynamic obstacles or objects.

The collision detection and collision avoidance may operate according to different stages, where a first stage may involve collecting sensor data that the collision detection and collision avoidance is based on, a second stage involves analyzing the data in order to determine where and if any collision risks exist, a third stage involves making a decision where decisions are made and a fourth stage involves implementing the decision. These stages can be implemented in different boxes. Furthermore, the above-mentioned stages are merely an example of the way in which the operation may be divided. It should be realized that other ways of dividing the operation may exist.

Human decision making is by nature multi-objective. A human decision maker can create alternative scenarios and evaluate them against each other. So far CDCA for autonomous navigation or advisory of conventional navigation are based on a single objective and therefore a single suggestion is provided. Moreover, CDCA only considers the inputs from the sensor unit and captured by mathematical models and algorithms. Therefore, the human judgement of overall conditions, development of the situation ahead, knowledge about local phenomena, such as strong currents, etc. are not considered.

When the human navigator performs a decision to execute a collision avoidance maneuver in a navigational situation, he or she considers multiple factors and several possible scenarios before executing it. The choice of the action may depend on the overall consideration of the local phenomena, information received from radio communication, or other experience-based information which cannot be captured into measurements of mathematical representations of the situations based on the existing sources of information.

The key aspect of the autonomous or semi-autonomous navigation is CDCA. It utilizes inputs from the sensor unit 24, such as AIS, radar, camera, positioning, wind, compass, etc. as well as the electronic nautical chart and the planned route to evaluate whether a collision avoidance action is needed. The adoption of such systems in practice can today be done only in a way that the human operator is responsible of safe actions. This means that the human operator needs to be aware of the situation and have means to take over the command at all situations.

In safe navigational operations, the key is to be able to interpret the situation correctly. The interpretation may affect the safest and most efficient way to execute the possible evasive maneuvers to mitigate the risks of collisions or groundings. Typically, in a COLREGs (the International Regulations for Preventing Collisions at Sea) situation, the give-way vessel is primarily supposed to adjust course. However, a human operator would consider the overall situation based on several alternatives:
1. Adjust course, but not speed
2. Adjust speed, not course
3. Adjust speed and course
4. Stop and wait
5. Crash-stop
   etc.

The actual choice of the alternatives for a human operator may depend on knowledge of the local conditions, forthcoming situation (which may not be visible yet), condition and capability of the other vessel, weather, etc. In an ideal world the CDCA system would have equal information of the situation, but in practice, human perception, memory, knowledge and communication capabilities enable acquiring information that is not available for a computer as of today.

In more complex situations, there could be more alternatives, such as choosing an alternative fairway, choosing smaller tolerances based on the interpreted situation, choosing non-COLREGs maneuver (meaning e.g. taking left turn instead of right) based on the type and navigational state of one or more targets, go away from the fairway (but remain within safe waters) etc.

It might be difficult for a human operator to evaluate simultaneously what actions are feasible (meaning that they lead to a situation where the distance to with regard to the fairway/safe waters as well as to other vessels/obstacles are within acceptable tolerances. On the other hand, the existing collision avoidance systems calculate and present a single alternative at a time. In case the CDCA has a wrong interpretation of the situation, the given advisory or action may be completely wrong and useless. Therefore, the resulting action may lead to a dangerous situation or alternatively the human operator may need to take manual control. The herein described aspects enables to maintain the autonomous mode and enable the operator to have the possibility to affect the actions of the CDCA system without the need to switch to manual control. Having ways to affect the system behavior and ensure safe operations without the need for full intervention in manual control is a prerequisite to reach higher levels of automation where continuous human supervision is not needed. However, the aspects described herein can also be applied in conventional vessels to increase the safety, comfort and efficiency of the operations while mitigating the workload of the crew.

Typically, if multiple objectives are considered in the existing CDCA systems, they employ a collision avoidance algorithm that is based on sequential calculation of collision avoidance maneuvers by choosing objectives from predefined list until the trajectory that the vessel is travelling along is safe. The first objective that leads to a safe solution is chosen. The objectives are typically in a prioritized list:
1. Adjust course
2. Adjust speed
3. Adjust course and speed
4. Crash-stop/emergency

In addition, there can be objectives regarding energy efficiency, safety, time, etc. Thus it is possible to have an energy consumption objective, a time duration objective and/or a safety objective. The energy consumption objective may be a minimum energy consumption objective, the time objective may be a minimum time objective and the safety objective may be a highest safety objective. The minimum energy consumption objective may be to have an additional consumption that is minimal compared with the energy consumption of the original route, the minimum time objective may be that the additional time required is minimal compared to the time of the original route and the safety objective may be to have a safety with the largest safety tolerances to the object.

While this leads to a safe and efficient collision avoidance, there is also a reliance on the CDCA making a correct interpretation of the situation and gives no additional insight/possibility for the human operator to (i) understand what other options there are (ii) adjust the behavior in the present situation. In principle the human operator could adjust the parameters online, but when in the middle of a collision avoidance situation, the focus is on the situation, not in thinking what parameters the system should have.

Aspects of the present disclosure are directed towards improving on this situation.

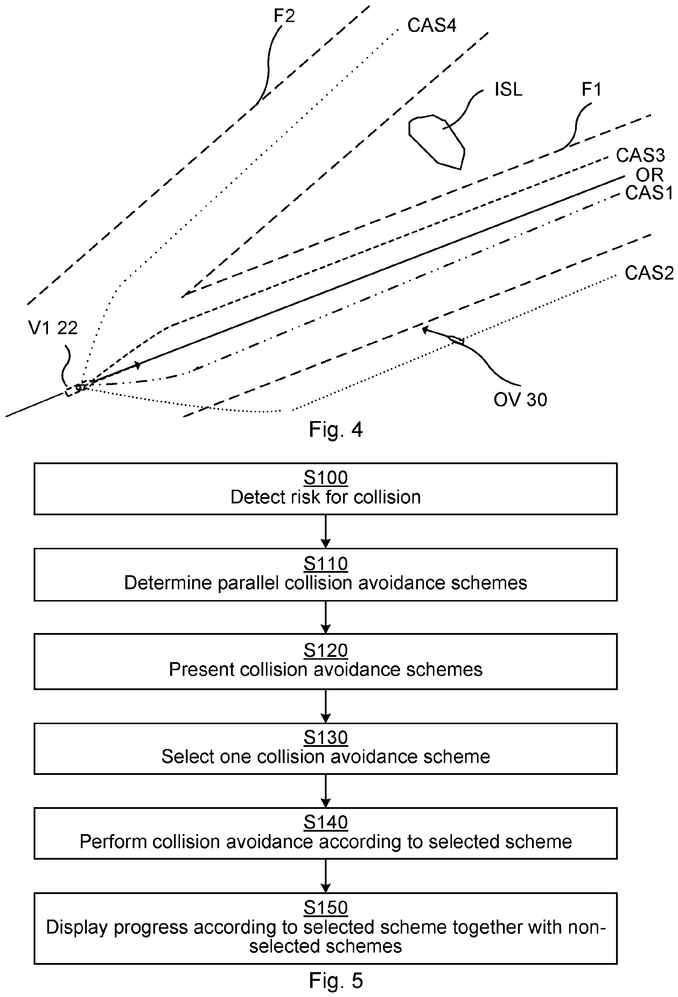

How this may be done will now be described with reference also being made to fig. 5, which shows a flow chart of a number of method steps in a first embodiment of a method of assisting the operator in collision avoidance for the first vessel travelling in a present passage along the original route OR in the body of water, which steps are being performed by the collision avoidance device 10.

The method may start by the collision avoidance device 10 detecting a risk situation for the first vessel 22, S100, which risk situation involves a possible collision with an object.

An object may be an object above, in or below the water.

An object may be a floating object, such as a buoy or another vessel. It may also be navigational hazard like an iceberg, but also shallow water, ground or a virtual forbidden area (determined by the operator for example). Objects above water can be cranes, bridges, platforms, terminal tunnels or gangways. Objects in water can be quays, islands, reefs, buoys, rafts and other vessels. Objects below water can be reefs and underwater rocks and part of the seabed if it is shallow.

For a static object, like an island or a reef, the detecting of a risk situation may involve determining the location of the object through considering sensor data, such as radar echoes, lidar images and camera images, positioning data and the electronic nautical chart. Also observations from 3rd party sources which may not be onboard the ship (like intelligent fairway markers) could be gathered, Small objects like buoys, floating platforms/pontoons, floating containers, debris, logs and fishnets may also be analyzed in this way. The same type of analysis is also possible for slowly moving objects like rowboats, kayakers, canoers and swimmers. For small boats that move with some speed such data may additionally be used to predict the heading and speed of the boat. Larger vessels may in turn transmit information about vessel position, vessel speed and heading using AIS. Shallow waters (waters in which there may be a risk of grounding) and forbidden areas (geofenced areas) may be determined based on the own position and electronic chart data. A human operator may even have and bring in data of the object as a virtual object.

This data may then be used to determine if there is a risk for the first vessel 22 to collide with the object or not, where the determining of the risk for collision of course also considers, the position, heading and speed of the first vessel 22. Also knowledge about wind may be used.

It can be observed that the object or obstacle with which there may be a collision is not necessarily another vessel, but can be another floating object, like a buoy, canoe, fishing net or even a human. The object or obstacle can also be a static or fixed object like an island or reef.

In the example given in fig. 4, the risk for collision is a risk for collision with another vessel OV 30, which other vessel may be detected as having a course and speed that will make the other vessel 30 cross the course of the first vessel 22 along the original route OR. The crossing may in this case additionally be a crossing that is made within a closest point to approach (CPA) to the other vessel. Alternatively, the risk for collision may be linked to a distance to the closest point to approach (DCPA) and/or time to the closest point of approach (TCPA).

It should be noted that CPA does not have to be represented as a single point. It may instead be represented by a probability distribution or an area that defines the likely location of the CPA with acceptable uncertainty. Moreover, the CPA may be calculated based on the already known future path that may contain already-decided maneuvers as well as turns according to the planned route.

Furthermore, the prediction of the other vessel's future position may also be based on significantly more complex methods than just assuming constant velocity and course.

After a risk for collision has been determined, the collision avoidance device 10 then determines a number of parallel collision avoidance schemes, S110.

The alternatives could involve adjusting speed, adjusting the heading or adjusting the speed and heading. The alternatives could also involve making a stop or an emergency stop.

The alternatives may additionally involve performing a non-COLREG maneuver, where such a maneuver is a maneuver that does not follow the COLREG rules. Thus, at least one collision avoidance scheme may involve performing an unregulated turn, which unregulated turn may not follow standardized rules, such as turning rules according to COLREG. This could involve making a left turn, which could be beneficial e.g. when encountering a sailing boat or fishing boat.

The alternatives could also include changing different parameters with regard to the object, such as changing the tolerances. The tolerances may be expressed in time and/or distance. For instance, a maneuver may be started based on a certain time/distance tolerance, such as a number of minutes before collision. There may also be a tolerance on how close the first vessel is allowed to pass the object, which tolerance may also depend on speed, where a close passage may be made with a slow speed. Thus, at least on tolerance may be linked to a later position and/or future point in time. The later position and future point in time will be discussed more later. At least one tolerance may additionally be linked to a closest allowed distance of the first vessel to the object possibly together with a highest allowed speed, where the closest allowed distance may be linked to CPA. The tolerances may also include CPA, DCPA and/or TCPA. It is for instance possible to use standard tolerances with regard to to distance to the other vessel dependent on vessel type/situation or smaller tolerances with regard to distance to the other vessel dependent on vessel type/situation.

The alternatives may also comprise staying firmly in the first fairway F1, accepting a deviation from the first fairway F1 but staying in safe waters or choosing an alternative fairway, such as going on the east side of an island or going on a west side of an island.

It is additionally possible that there is an "early avoidance" behaviour where a very small speed and/or course change is made very early to avoid the whole encountering situation. This may be beneficial at open sea when it may be desirable to stay far away from other vessels, but it is still of interest to have the capability to perform actual COLREG-maneuvers in encountering situations.

Thus, at least one of the parallel collision avoidance schemes may involve a change of heading. At least one collision avoidance scheme may additionally or instead involve a change of course inside the first fairway F1. At least one collision avoidance scheme may involve a leaving of the first fairway F1. At least one collision avoidance scheme may additionally or instead involve changing course from the first fairway F1 to another fairway, like the second fairway F2. At least one collision avoidance scheme may involve a change of speed of the first vessel 22. Additionally or instead, at least one collision avoidance scheme may involve stopping the first vessel.

Generally, a collision avoidance scheme may be any of the above-mentioned types. A collision avoidance scheme may thus involve any of the above-mentioned alternatives. However, in the example of fig. 4 there is a first collision avoidance scheme CAS1, a second collision avoidance scheme CAS2, a third collision avoidance scheme CAS3 and a fourth collision avoidance scheme CAS4. In this example all collision avoidance schemes involve a route change, where the first scheme CAS1 involves a route change which involves staying firmly within the first fairway F1 and the third scheme CAS3 involves a route and speed change that is also within but close to an edge of the first fairway F1. The second scheme CAS2 in turn involves a change of course out of the first fairway F1 while still remaining in safe waters and the fourth scheme CAS4 involves a change from the first to the second fairway in order to pass on another side of the island ISL than that which the first fairway F1 passes.

The parallel collision avoidance schemes may additionally each be starting from a corresponding starting position in the present passage of the route, which starting position may be a present position at a present point in time or a later position at a future point in time. The starting positions may be the same. Each scheme may thus have the same starting position. Alternatively, one or more of the schemes may have starting positions that differ from each other.

It may be advantageous if the starting positions are at later positions at future points in time. Thereby, it is possible to detect a situation ahead and plan the different collision avoidance schemes along with alternative avoidance behaviors a number of minutes or nautical miles before they are to be implemented.

After having determined the different schemes, the collision avoidance device 10 presents the collision avoidance schemes CAS1, CAS2, CAS3, CAS4 to the operator, S120, which presenting may be made through displaying the schemes on the display 28 using the electronic nautical chart.

The collision avoidance device 10 also selects one of the collision avoidance schemes for avoiding collision with the object, S130. The selection may be preceded by a reception of a collision avoidance scheme choice from the operator. In this case the scheme being selected by the collision avoidance device is a scheme that is chosen by the operator. Alternatively, the collision avoidance device 10 may make a scheme selection independently of the operator. As an example, it may analyse each of the parallel collision avoidance schemes and determine a primary collision avoidance scheme based on the analysis. In this case the analysing may further comprise ranking the collision avoidance schemes according to a ranking criterion, where the primary collision avoidance scheme is the highest ranked collision avoidance scheme. The primary collision avoidance scheme may be determined based on a selection criterion such as priority, vessel type and/or situation. For instance, the vessel owner or operator may have specifically defined guidelines in their ISM (International Safety Management) procedures, which define, for example, how to deal with encountering certain kinds of vessels. For example, a passenger vessel would typically want to give way for a large oil tanker (and react very early with large tolerances), almost regardless of the status of the oil tanker. Moreover, in certain harbours, some vessels may have priority. Cruise ferries may as an example have priority over other vessels in some ports, which means that other vessels will have to give way primarily. It is also or instead possible that one or more of the previously mentioned objectives are considered.

The ranking criterion may also consider factors, such as energy efficiency, safety and time.

Thus, the selection may comprise an automatic selection of the primary collision avoidance scheme. Here it may also be mentioned that the operator may be able to adjust the ranking.

Thus, the collision avoidance device 10 may always expect a choice from the operator before it starts executing any collision avoidance manoeuvres, which is the case in a level 2 automation system, where the decision is always made by a human. Alternatively, the collision avoidance device 10 may have a default priority list of collision avoidance schemes that the operator can affect and the collision avoidance device always automatically selects to execute and executes the first scheme from that list, the primary collision avoidance scheme, but would also show other safe alternative schemes. Then the operator would be free to change from the automatically selected scheme to another safe alternative. The default priority list may be based on the ranking made according to a ranking criterion.

After a scheme has been selected, the collision avoidance device 10 then performs collision avoidance according to this selected collision avoidance scheme, S140. This may involve operating the vessel or ordering the vessel navigation control device 26 to operate the vessel according to the selected collision avoidance scheme.

Furthermore, the collision avoidance device 10 also displays the progress of the first vessel 22 according to the selected collision avoidance scheme together with the non-selected collision avoidance schemes, S150, which may again be made through displaying it on the display 28 using the electronic nautical chart. The progress of first vessel 22 according to the selected collision avoidance scheme may be the progress of the first vessel along a path of the selected collision avoidance scheme, which path may be along the original route or along an alternative route. In order to do this, the collision avoidance device 10 may update the non-selected collision avoidance schemes based on the progress according to the selected collision avoidance-scheme. This may involve updating the non-selected collision schemes based on the progress of the first vessel along the above-mentioned path of the selected collision avoidance scheme. Thereby, the collision avoidance device 10 may also continuously analyze the risk situation and update the parallel collision avoidance schemes based on the analysis.

The updating of the parallel collision avoidance schemes may additionally be made if the situation develops in a different way than anticipated, such as if the risk for collision remains or a new risk for collision is introduced during the use of the selected collision avoidance scheme.

As was mentioned above, the presenting of the collision avoidance schemes may with advantage be a displaying of the collision avoidance schemes and the presenting of the progress of the first vessel may be a displaying of the progress of the first vessel on the previously mentioned display. However, it should be realized that the displaying could be made using other other image rendering devices such as AR/VR glasses, on mobile/other wireless/remote devices and even through projection on windows/transparent displays. The presenting could also be made in other ways than through displaying, such as through communicating by natural language. The operator may in a similar manner use any of a multitude of input devices for communicating with the collision avoidance device. He or she may thus be able to use any physical input device, such as touch screens, keypads or keyboards. He or she may also be able to use physical gestures or natural language, etc.

The proposed multi-objective approach enables the calculation of several scenarios with different set of actions and objectives and presenting them as alternatives for the operator. The operator can eventually take the decision of which scenario is the best considering the aspects which are not necessarily considered by the collision avoidance device 10. Alternatively, the operator may allow the collision avoidance device 10 to select collision avoidance scheme and then change scheme if the device selected scheme is not satisfactory. This latter change can also be made even if the selected scheme is a scheme initially chosen by the operator.

Moreover, through updating the non-selected schemes as the first vessel progresses according to the selected scheme, it is possible for the operator to see if any of the alternatives becomes better than the selected scheme. If this is the case, it is additionally possible for the operator to switch to the better alternative. Thus, safe and reasonable alternative schemes may be maintained even after a selected scheme is being employed.

Thus, after the vessel has started to be operated according to the selected collision avoidance scheme, the collision avoidance device 10 may receive a choice of another collision avoidance scheme from the operator and change to the newly chosen collision avoidance scheme, which may involve operating the vessel or ordering the vessel navigation control device 26 to operate the vessel according to the newly chosen collision avoidance scheme.

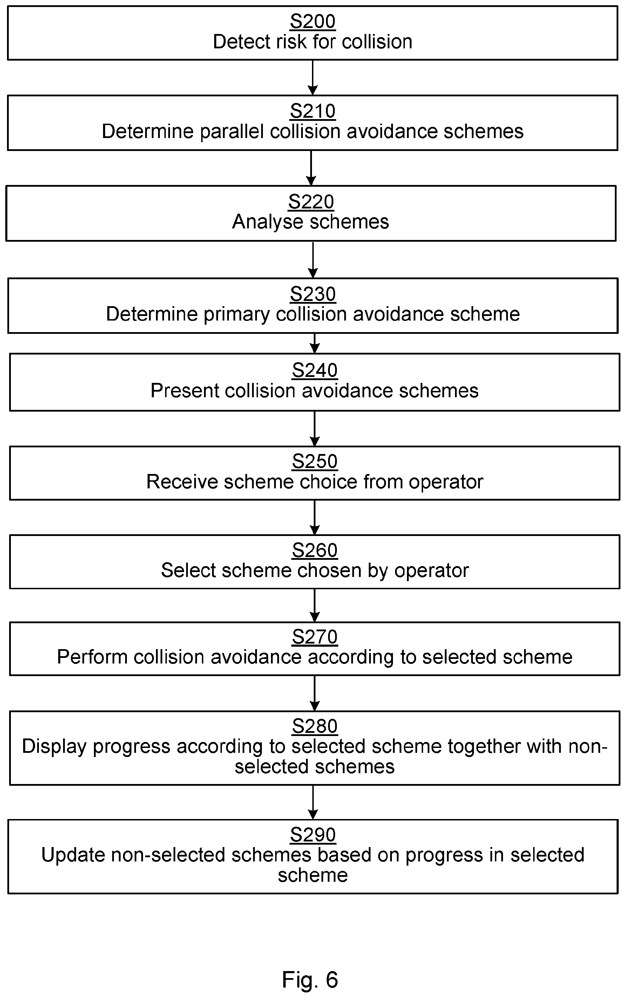

Now a second embodiment will be described with reference being made to fig. 6, which shows a flow chart of a number of method steps in a second embodiment of a method of assisting the operator in collision avoidance in a present passage along the original route OR, which steps are being performed by the collision avoidance device 10.

The method may again start by the collision avoidance device detecting a risk situation for the first vessel 22, S200, which risk situation involves a possible collision with an object, such as with the other vessel OV 30. This may be done in any of the ways disclosed in the first embodiment.

After a risk for collision has been determined, the collision avoidance device 10 then determines a number of parallel collision avoidance schemes, S210, where a collision avoidance scheme may be any of the types described in relation to the first embodiment, for instance the first, second, third and fourth collision avoidance schemes CAS1, CAS2, CAS3, CAS4.

The parallel collision avoidance schemes may also here each be starting from a corresponding starting position in the present passage of the route, which starting position may be a present position at a present point in time or a later position at a future point in time. The starting positions may differ from each other or they may be the same.

The collision avoidance device 10 also analyses each of the parallel collision avoidance schemes, S220, and determines a primary collision avoidance scheme based on the analysis, S230.

The analysing may comprise ranking the collision avoidance schemes according to a ranking criterion, where the primary collision avoidance scheme is the highest ranked collision avoidance scheme. The primary collision avoidance scheme may be determined based on a selection criterion such as priority, vessel type and/or situation, where the same principles that were described earlier may be applied. The ranking may as an example be based on the probability of collision, where a scheme with the lowest collision probability may have the highest rank. As an example, the first collision avoidance scheme CAS1 may be the highest ranked, primary collision avoidance scheme, the second collision avoidance scheme CAS2 may be the second highest ranked scheme, the third collision avoidance scheme CAS3 may be the third highest ranked scheme and the fourth collision avoidance scheme CAS4 may be the fourth highest ranked scheme. The ranking may also be based on other factors such as energy consumption, time and safety tolerances.

Thereafter the collision avoidance device 10 presents the collision avoidance schemes CAS1, CAS2, CAS3, CAS4 to the operator, S240, which presenting may again be made through displaying on the display 28 using the electronic nautical chart. The ranking and especially which scheme is the primary collision avoidance scheme may also be reflected in the presenting. The operator may here also change or adjust the priorities.

In this embodiment the operator additionally chooses which collision avoidance scheme that is to be used and therefore the collision avoidance device 10 receives a scheme choice being made by the operator, S250, and then selects, in a first selection, the scheme chosen by the operator to be the collision avoidance scheme that is used for avoiding collision, S260.

After a scheme has been selected, for instance the first collision avoidance scheme CAS1, the collision avoidance device 10 then performs collision avoidance according to the selected scheme, S270, which may involve operating the vessel or ordering the vessel navigation control device 26 to operate the vessel according to the selected collision avoidance scheme.

Also here, the collision avoidance device 10 displays the progress of the first vessel 22 according to the selected collision avoidance scheme together with the non-selected collision avoidance schemes, S280, which may again be the displaying on the display 28 using the electronic nautical chart.

The collision avoidance device 10 also updates the non-selected collision avoidance schemes based on the progress according to the selected collision avoidance-scheme. The collision avoidance device 10 may also here continuously analyze the risk situation and update the parallel collision avoidance schemes based on the analysis.

The updating of the parallel collision avoidance schemes may also here be made if the situation develops in a different way than anticipated, such as if the risk for collision remains or a new risk for collision is introduced during the use of the selected collision avoidance scheme.

After the first vessel has started to be operated according to the first selected collision avoidance scheme, the collision avoidance device 10 may receive a choice of another collision avoidance scheme from the operator and change to the newly chosen collision avoidance scheme, which may involve operating the vessel or ordering the vessel navigation control device 26 to operate the vessel according to the newly chosen collision avoidance scheme.

Thus, the collision avoidance device 10 simultaneously calculates several alternative feasible possible behaviors of the first vessel 22 and presents them for the human operator, chooses a primary behavior based on a criterion (could be a priority, vessel type, situation, etc. dependent), enables the human operator to choose any of the feasible behaviors and continuously maintains the alternative behaviors depending on the development of the situation.

The alternatives could be determined based on (non-exhaustive list):
1. Different objectives such as
   a. Adjust speed
   b. Adjust heading
   c. Adjust speed and heading
   d. Stop
   e. Emergency stop
   f. Perform "non-COLREGs action" (e.g. turn left. This could be beneficial in e.g. when encountering a sailing boat, fishing boat, etc.).
2. Different sets of parameters
   a. Standard tolerances with regard to distance to the other vessel dependent on vessel type/situation
   b. Smaller tolerances with regard to distance to the other vessels dependent on vessel type/situation
   c. Staying firmly in fairway
   d. Accepting deviation from fairway but staying in safe waters
3. Choosing alternative fairway
   a. E.g. going east side from an island
   b. E.g. going west side from an island

Thus several different alternatives for handling a collision risk situation may be simultaneously visualized for the operator, who may then be able to choose a most preferred of the alternatives based on his/her interpretation of the collision risk situation rather than the collision avoidance device giving only one alternative. The feasible alternatives may also be continuously maintained/updated based on the development of the collision risk situation. The alternatives may also include different sets of "safety parameters" enabling the user to mitigate the situation with controlled increase in risk (e.g. accepting going away from the fairway in which the first vessel travels).

It is possible that the situation may become unsafe with the chosen collision avoidance scheme. This may happen if the other vessel does something unexpected or if yet another vessel is detected, which latter vessel may for instance have been occluded by an island or the other vessel. It may also occur if the CDCA system starts estimating the vessel status in a different way (for example, if two sensors starts to pick up the object instead of one, making it more reliable). In this case, the collision avoidance device could act as it has acted earlier, that is, it could detect the danger and recalculate/reconfigure to the updated situation with all alternatives, and possibly choose the best/highest priority.

In international ocean-going shipping there will not be fully autonomous ships for a very long time. Therefore, the operator will have an active role in using the collision avoidance device in the future. In order to make the collision avoidance device as useful as possible for the operator, it is very important to present alternatives. There are several reasons for this:
1. The operator may have tacit information of the collision risk situation, operational area, weather, currents, other vessel's behavior etc. that is not captured by any of the digital information sources.
2. The collision avoidance device may make the wrong interpretation of the situation and therefore the first or primary alternative may be wrong or useless.
3. Good captains typically have one or more backup plans to enable safe mitigation of the collision risk situation even if the primary assumption fails or the situation develops in a different way than anticipated. Presenting several scenarios for the operator even with different safety margins enables the operator to continuously be aware of the remaining safe choices in the collision risk situation.

The multi-scenario feature for collision avoidance will be much more useful for users in complex situations.

85-95 % of the marine accidents are somehow subject to human errors. A lot of those are subject to poor situational awareness and interpretation of the situation. Intelligent decision support tools enabling the users to cope with complex situations in a safe and efficient manner will increase safety and also enable fuel savings due to better anticipation of the complex situations.

The multi-scenario solution for collision avoidance enables novel collision avoidance advisory feature, but also more interactive semi-autonomous features, where the operator role is to choose the best option from different alternatives rather than in the current autonomous concepts, where the operator is either using the single solution given by the collision avoidance device or then taking over to manual control.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for assisting an operator in collision avoidance for a first vessel (22) traveling in a present passage along a route (OR) in a body of water, the method being performed by a collision avoidance device (10) and comprising:
detecting (S100; S200) a risk situation for the first vessel (22) involving a possible collision with an object (30),
determining (S110; S210) a number of parallel collision avoidance schemes (CAS1, CAS2, CAS3, CAS4),
presenting (S120; S240) the collision avoidance schemes (CAS1, CAS2, CAS3, CAS4) to the operator,
selecting (S130; S260) one of the collision avoidance schemes,
performing (S140; 270) collision avoidance according to the selected collision avoidance scheme, and
displaying (S150; S280) the progress of the first vessel (22) according to the selected collision avoidance scheme together with the non-selected collision avoidance schemes.

2. The method as claimed in claim 1, further comprising continuously analysing the risk situation and updating the parallel collision avoidance schemes based on the analysis.

3. The method as claimed in claim 1 or 2, further comprising updating (S290) the non-selected collision avoidance schemes based on the progress according to the selected collision avoidance-scheme.

4. The method as claimed in any previous claim, further comprising analysing (S220) each of the parallel collision avoidance schemes and determining (S230) a primary collision avoidance scheme based on the analysis.

5. The method according to claim 4, wherein the selection comprises an automatic selection of the primary collision avoidance scheme.

6. The method according to any of claims 1 - 4, further comprising receiving (S250) a collision avoidance scheme choice made by the operator and the selecting (S260) of the collision avoidance scheme comprising selecting a collision avoidance scheme according to this choice for use in performing collision avoidance.

7. The method according to any previous claim, wherein the present passage along the route (OR) involves a passage in a first fairway (F1) and at least one of the parallel collision avoidance schemes (CAS1, CAS2, CAS3, CAS4) involves a change of heading.

8. The method according to claim 7, wherein at least one collision avoidance scheme (CAS1, CAS3) involves a change of course inside the first fairway (F1).

9. The method according to claim 7 or 8, wherein at least one collision avoidance scheme (CAS2, CAS4) involves a leaving of the first fairway (F1).

10. The method according to any of claims 7 - 9, wherein at least one collision avoidance scheme involves changing course from the first fairway (F1) to a second fairway (F2).

11. The method according to any previous claim, wherein at least one collision avoidance scheme involves a change of speed of the first vessel (22).

12. The method as claimed in any previous claim, wherein at least one collision avoidance scheme involves stopping the first vessel (22).

13. The method according to any previous claim, wherein at least one collision avoidance scheme involves performing an unregulated turn.

14. The method as claimed in any previous claim, wherein at least one collision avoidance scheme has tolerance settings with regard to time, distance, and/or speed to an object (30) that the first vessel (22) risks to collide with, which tolerance settings are set based on vessel type and/or situation.

15. A collision avoidance device (10) for assisting an operator in collision avoidance for a first vessel (22) traveling in a present passage along a route (OR) in a body of water, the collision avoidance device (10) comprising a processor (12) operative to:
detect a risk situation for the first vessel (22) involving a possible collision with an object (30),
determine a number of parallel collision avoidance schemes (CAS1, CAS2, CAS3, CAS4),
present the collision avoidance schemes (CAS1, CAS2, CAS3, CAS4) to the operator,
select one of the collision avoidance schemes,
perform collision avoidance according to the selected collision avoidance scheme, and
display the progress of the first vessel (22) according to the selected collision avoidance scheme together with the non-selected collision avoidance schemes.

16. A first vessel (22) comprising the collision avoidance device according to claim 15.

17. A computer program for assisting an operator in collision avoidance for a first vessel (22) traveling in a present passage along a route (OR) in a body of water, the computer program comprising computer program code (16) which when run by a processor (12) of a collision avoidance device (10) causes the processor (12) to:
detect a risk situation for the first vessel (22) involving a possible collision with an object (30),
determine a number of parallel collision avoidance schemes (CAS1, CAS2, CAS3, CAS4),
present the collision avoidance schemes (CAS1, CAS2, CAS3, CAS4) to the operator,
select one of the collision avoidance schemes,
perform collision avoidance according to the selected collision avoidance scheme, and
display the progress of the first vessel (22) according to the selected collision avoidance scheme together with the non-selected collision avoidance schemes.

18. A computer program product for assisting an operator in collision avoidance for a first vessel (22) traveling in a present passage along a route (OR) in a body of water, the computer program product comprising a data carrier (20) with said computer program code (16) according to claim 17.
